(19) Europäisches Patentamt
European Patent Office
Office européen des brevets

(11) Veröffentlichungsnummer: **0 462 469 A1**

# (12) EUROPÄISCHE PATENTANMELDUNG

(21) Anmeldenummer: **91109402.7**

(51) Int. Cl.5: **C08F 267/10**, D21H 17/42

(22) Anmeldetag: **08.06.91**

(30) Priorität: **21.06.90 DE 4019798**

(43) Veröffentlichungstag der Anmeldung:
**27.12.91 Patentblatt 91/52**

(84) Benannte Vertragsstaaten:
**DE FR NL**

(71) Anmelder: **BAYER AG**

**W-5090 Leverkusen 1 Bayerwerk(DE)**

(72) Erfinder: **Sackmann, Günter, Dr.**
**Friedenberger Strasse 11**
**W-5090 Leverkusen 3(DE)**
Erfinder: **König, Joachim, Dr.**
**Auf dem Broich 25**
**W-5068 Odenthal(DE)**
Erfinder: **Puchner, Fritz, Dr.**
**Brückenstrasse 46**
**W-5000 Köln 50(DE)**
Erfinder: **Bäumgen, Heinz**
**Sperlingsweg 2**
**W-5090 Leverkusen 1(DE)**

## (54) Leimungsmittel für Papier.

(57) Emulsionspolymerisate, die durch radikalische Polymerisation von Monomeren in Gegenwart von
a) Polymerisation der Formeln

EP 0 462 469 A1

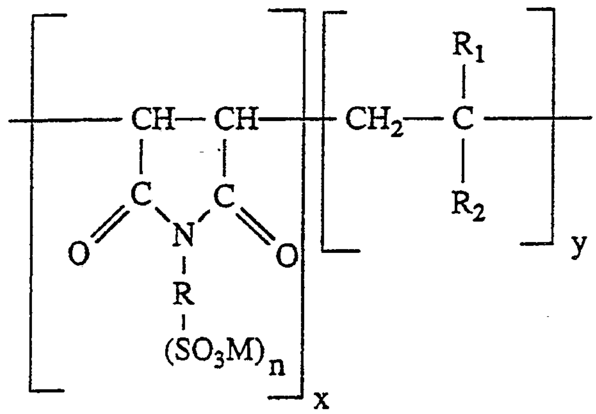

(I)

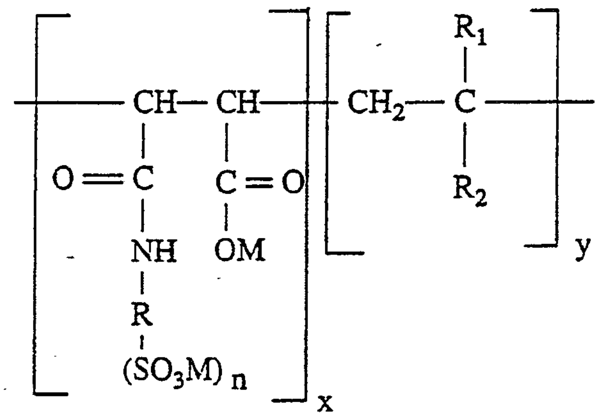

(II)

worin die Reste die in der Beschreibung genannten Bedeutungen haben, und

b) niedermolekularen anionischen Emulgatoren hergestellt werden,

eignen sich hervorragend als Oberflächenleimungsmittel für Papier. Sie zeichnen sich durch geringe Neigung zur Schaumbildung und ein breites Anwendungspektrum aus.

Die Erfindung betrifft Polymerisate und ihre Verwendung, insbesondere zur Oberflächenleimung von Papier oder papierähnlichen Materialien.

Die heute von den Papierherstellern angestrebte Produktion im neutralen bis schwach alkalischen Bereich bringt hinsichtlich der Einsatzmaterialien, z.B. Kreide als Füllstoff, und der durch den Wegfall von Aluminiumsulfat bedingten größeren Stabilität des erzeugten Papiers gegenüber der bisher meist durchgeführten sauren Fahrweise erhebliche Vorteile.

Zu einer wirksamen Oberflächenleimung von im Neutralen hergestellten Papieren werden deshalb Leimungsmittel benötigt, die einen schwach anionischen Ladungscharakter aufweisen und somit auf alaunfreien sowie Kreidehaltigen Papieren eine ausgezeichnete Leimungswirkung ergeben. Wünschenswert wäre zusätzlich noch, daß solche Leimungsmittel bei Bedarf auch auf im sauren pH-Bereich unter Zusatz von Aluminiumsulfat hergestellten Papieren eingesetzt werden könnten, womit der gesamte mögliche Herstellungsbereich für Papier abgedeckt wäre.

Aufgabe der vorliegenden Erfindung ist es somit, Leimungsmittel für Papier bereitzustellen, die ein breiteres Anwendungsspektrum als die bisher hauptsächlich verwendeten, stark anionischen Produkte haben, und die sowohl im sauren pH-Bereich bei alaunhaltigen Papieren als auch im neutralen bis schwach alkalischen pH-Bereich bei alaunfreien sowie kreidehaltigen Papieren eingesetzt werden können und die bei geringer Neigung zur Schaumbildung eine ausgezeichnete Leimungswirkung ergeben.

Die Erfindung betrifft somit Polymerisate, die dadurch erhältlich sind, daß man zumindestens ein radikalisch polymerisierbares Monomer in Gegenwart eines Gemisches aus einem Polymerisat der Formeln (I) und/oder (II)

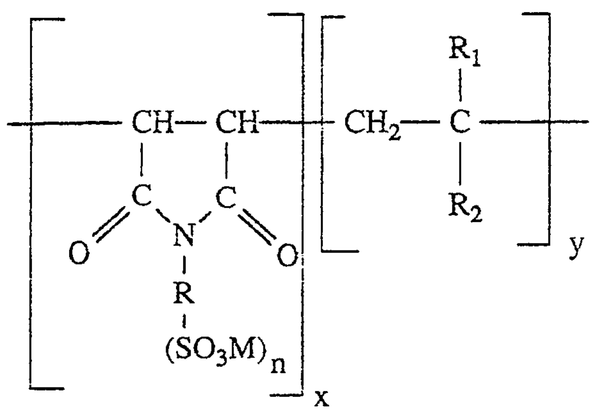

(I)

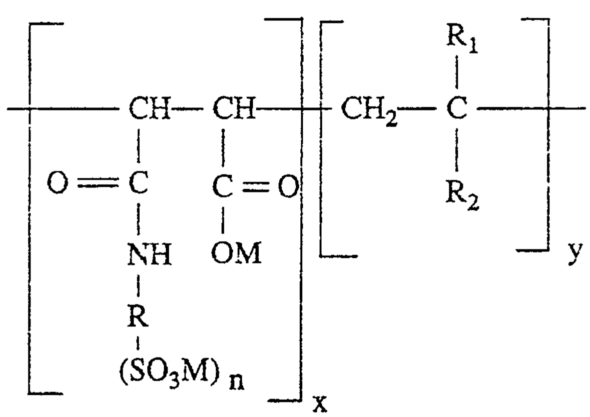

(II)

in denen

- M einen kationenbildenden Rest, vorzugsweise H, Na, K, $NH_4$, $R_3NH_3$,
- n 1 oder 2,
- R einen aliphatischen Rest mit 1 bis 10 C-Atomen oder einen aromatischen Rest mit 6 bis 10 C-Atomen, bevorzugt einen von einem $C_1$-$C_4$-Alkan oder von Benzol, Methylbenzol oder Naphthalin abgeleiteten Rest oder $-(CH_2)_2NH(CH_2)_2-$,
- $R_1$ H,$-CH_3$,
- $R_2$ H, $C_1$-$C_{16}$-Alkyl, vorzugsweise $-CH_3$, $-C_2H_5$, $-C_4H_9$, $-CH_2-C(CH_3)_3$,$-C_{14}H_{29}$, $-C_{16}H_{33}$ und Phenyl,

$R_3$ Kohlenwasserstoffrest eines Amins bezeichnen und

x,y so gewählt werden, daß das Gewichtsmittelmolekulargewicht ($\overline{M}_w$) der Polymerisate (I) und (II) 5000 bis 500 000, vorzugsweise 10 000 bis 100 000, beträgt und das Verhältnis von x:y = 1:4 bis 1:1, bevorzugt 1:3 bis 1:1 ist,

und einem niedermoleklaren, Sulfonsäuregruppen tragenden Emulgator der allgemeinen Formel (III)

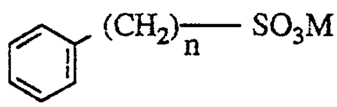

(III)

wobei

n = 10 - 14,

M = H, Na, K, $NH_4$, $R_3NH_3$ bedeuten,

einer radikalischen Emulsionspolymerisation unterwirft.

Bei den Polymerisaten der Formeln (I) und/oder (II) kann es sich um Gemische handeln, in denen vorzugsweise ≧80, besonders bevorzugt ≧90 Gew.-%, bezogen auf das Gemisch, Struktureinheiten (I) vorliegen.

Das Mischungsverhältnis zwischen polymerem Emulgator (Formel (I) und (II)) und niedermolekularem Emulgator (Formel (III)) liegt zwischen 20:1 und 1:1, bevorzugt zwischen 15:1 und 3:2, besonders bevorzugt zwischen 10:1 und 5:2.

Die Gesamtmenge an eingesetztem Emulgatorgemisch aus polymerem und niedermolekularem Emulgator beträgt, bezogen auf die zu polymerisierenden Monomeren, 2,5 bis 30 Gew.-%, bevorzugt 7,5 bis 20 Gew.-%.

Als radikalisch polymerisierbare Monomere eignen sich insbesondere Styrol(derivate), (Meth)Acrylate und/oder (Meth)Acrylnitril sowie Gemische dieser Monomeren. Beispielhaft seien genannt: Styrol, α-Methylstyrol, Acrylnitril, Vinylacetat, Ethylacrylat, Methylmethacrylat, n-Butylacrylat, i-Butylacrylat, 2-Ethylhexylacrylat, Methacrylsäureoxipropylester. Besonders bevorzugt werden n-Butylacrylat, Styrol und Acrylnitril eingesetzt. Ganz besonders bevorzugt kommt ein Gemisch zum Einsatz, das 20 bis 80, insbesondere 30 bis 70 Gew.-%, n-Butylacrylat und 80 bis 20, insbesondere 70 bis 30 Gew.-%, Acrylnitril enthält.

Die radikalische Emulsionspolymerisation der Monomeren in Gegenwart des Emulgatorgemisches aus den Polymerisaten (I) und/oder (II) sowie dem der Formel (III) entsprechenden niedermolekularen Emulgator, welches als Emulgator und Pfropfsubstrat wirken kann, erfolgt in üblicher Weise. Beispielsweise kann man dabei wie im folgenden beschrieben vorgehen:

Es wird eine radikalisch initiierte Copolymerisation der Monomeren(gemische) in Gegenwart wäßriger Lösungen der Emulgatormischung durchgeführt. Als Radikalstarter eignen sich z.B Kaliumpersulfat, Ammoniumpersulfat, organische Peroxide, organische Hydroperoxide, Wasserstoffperoxid sowie Redoxsysteme. Die Emulsionspolymerisationen erfolgen bei Temperaturen zwischen 20° C und 100° C, bevorzugt 40° C und 80° C.

Die Durchführung der Emulsionspolymerisation kann entweder auf die Weise erfolgen, daß man eine wäßrige Lösung des Emulgatorgemisches vorlegt und dann die Monomeren und den Initiator über einen bestimmten Zeitraum, z.B. zwischen 2 und 6 Stunden, getrennt zudosiert, oder aber, daß man einen Teil des Emulgatorgemisches in Wasser vorlegt und den Rest zusammen mit den Monomeren und dem Initiator in getrennten Mengenströmen ebenfalls über einen Zeitraum von 2 bis 6 Stunden zudosiert. Es kann aber auch so gearbeitet werden, daß über den gesamten Zeitraum der Polymerisation Emulgatorgemisch, Initiator und Monomere getrennt und kontinuierlich zudosiert werden und nur eine bestimmte Menge an Wasser vorgelegt wird. Diese Art der Polymerisation eignet sich aber auch zur Durchführung nach einer batch-Fahrweise, d.h. Emulgatorgemisch, Monomer(gemisch) und Initiator, werden zusammen vorgelegt, auf die gewünschte Polymerisationstemperatur erhitzt und zwischen 2 und 10 Std. bei dieser Temperatur gehalten.

Nach Beendigung der Polymerisationsreaktion auf die beispielhaft beschriebene Art ist eine feinteilige wäßrige Polymeremulsion mit einem mittleren Teilchendurchmesser zwischen 40 und 400 nm entstanden. Die Emulsion enthält neben Homo- und/oder Copolymerisaten der zur Polymerisation eingesetzten Monomeren oder Monomerengemische auch Anteile von Pfropfprodukten der Monomeren, die auf die polymeren Emulgatoren aufgepfropft sind.

Gewünschtenfalls kann man die wäßrigen Polymeremulsionen in üblicher Weise zur Gewinnung der festen Polymerisate aufarbeiten.

Die erfindungsgemäßen Polymerisate können z.B. als filmbildende Materialien oder als Schlichtemittel

für Fasern, insbesondere Glasfasern, verwendet werden. Vorzugsweise verwendet man sie jedoch in Form (von bei ihrer Herstellung anfallenden) wäßrigen Emulsionen zur Oberflächenleimung von Papier oder papierähnlichen Materialien wie Karton oder Pappe.

Es handelt sich dabei um Oberflächenleimungsmittel für Papier mit schwach anionischem Ladungscharakter und äußerst geringer Neigung zur Schaumbildung sowie einem sehr breiten Anwendungsspektrum. So können sie bei der Papierherstellung sowohl im sauren als auch im neutralen pH-Bereich eingesetzt werden.

Sie geben bei alaunhaltigen, alaunfreien, vorgeleimten und holzhaltigen Papieren, die unterschiedliche Füllstoffe, wie Kaolin, Kreide oder $TiO_2$, enthalten, eine ausgezeichnete Leimungswirkung.

Für die Qualität der Leimungswirkung der erfindungsgemäßen Leimungsmittel ist von entscheidender Bedeutung, daß bei der Herstellung der Emulsionspolymerisate das Gemisch aus polymerem und niedermolekularem Emulgator vor der Polymerisation der Monomeren vorgelegt, bzw. bei Durchführung der Polymerisation als Zulaufansatz gleichzeitig mit dem Monomerengemisch zugegeben wird.

Wird so verfahren, daß man zunächst allein in Gegenwart des polymeren Emulgators polymerisiert und nach Beendigung der Reaktion den niedermolekularen Emulgator zumischt, dann erhält man Produkte mit wesentlich schlechteren anwendungstechnischen Eigenschaften sowohl hinsichtlich der Leimungswirkung als auch des Schaumverhaltens.

Die Oberflächenleimungsmittel sind nach allen bei der Papierherstellung für die Oberflächenleimung gebräuchlichen Verarbeitungsmethoden, wie Einsatz in der Leimpresse oder Aufbringen durch Sprühverfahren, einsetzbar. Die Leimungsmittel können sowohl alleine als auch in Kombination mit wäßrigen Lösungen von Polymeren zur Anwendung kommen. Sie sind gegenüber schaumfördernden Einflüssen, z.B. ungünstigen apparativen Voraussetzungen an der Papiermaschine oder der Leimpresse, schaumbildenden Zusatzstoffen in der Leimungsmittelflotte und hohen Härtegraden des bei der Papierherstellung verwendeten Wassers, unempfindlich. Neben ihrer guten Leimungswirkung stellt ihre geringe Neigung zur Schaumbildung einen weiteren Vorteil dar, da sie ohne Zusatz von Entschäumungsmitteln eingesetzt werden können. Die Leimungsmittel eignen sich entweder alleine oder in Kombination mit Leimungsmitteln, die zur Masse gegeben werden, für die Oberflächenleimung nahezu aller in der Praxis hergestellten Papierqualitäten, z.B. von alaunhaltigen, alaunfreien, mit Kaolin gefüllten, mit Kreide gefüllten, mit $TiO_2$ gefüllten, im neutralen und sauren pH-Bereich gefahrenen, ungeleimten, vorgeleimten, holzhaltigen und Altpapier enthaltenden Papieren.

Die neuen Leimungsmittel zeichnen sich besonders dadurch aus, daß sie im Vergleich zu Leimungsmitteln mit hoher Anionizität ein wesentlich breiteres Anwendungsspektrum besitzen. Während letztere nur auf alaunhaltigen, vorgeleimten und holzhaltigen Papieren eine gute Leimungswirkung aufweisen, zeigen die erfindungsgemäßen Produkte zusätzlich zu den genannten Papieren auch auf alaunfreien und kreidehaltigen Papieren ausgezeichnete Leimungseigenschaften. Zur Erzielung einer guten Leimung auf den beiden zuletzt genannten Papieren war bisher immer der Einsatz von Oberflächenleimungsmitteln mit kationischer Ladung notwendig.

Die Polymerisate (I) und (II) sind teilweise bekannt (siehe z.B. DE-OS 3 344 470). Ihre Herstellung kann nach oder in Analogie zu bekannten Verfahren erfolgen. Beispielsweise kann man wie folgt vorgehen: Copolymere aus Maleinsäureanhydrid oder Maleinsäure(halb)estern und Olefinen der Formel

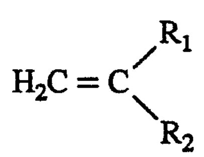

(IV)

in der $R_1$, $R_2$, die zu den Formeln (I) und (II) angegebenen Bedeutungen haben, werden mit Aminosulfonsäuren bzw. deren Salzen der Formel

$H_2N\text{-}R\text{-}(SO_3M)_n$ (V)

in der

R, M und n, die zu den Formeln (I) und (II) angegebenen Bedeutungen haben, in organischen Lösungsmitteln oder vorzugsweise in wäßriger Lösung bei Temperaturen bis 250 °C, bevorzugt 100 bis 250 °C, besonders bevorzugt 120 bis 200 °C, und Reaktionszeiten von 5 bis 20 Stunden, bevorzugt 10 und 15 Stunden, umgesetzt.

Als Copolymere kommen alternierend oder statistisch aufgebaute Copolymerisate aus Maleinsäureanhydrid und z.B. Ethylen, Styrol, α-Methylstyrol, Propylen, Isobutylen, Buten-1, Diisobutylen, Dodecen-1, Hexadecen-1 und Octadecen-1 in Frage, wobei das molare Verhältnis zwischen Maleinsäureanhydrid und den zu copolymerisierenden Monomeren zwischen 1:1 und 1:4, vorzugsweise zwischen 1:1 und 1:3 liegt. Die Herstellung solcher Copolymerisate ist bekannt und ist z.B. in Houben-Weyl, Methoden der organischen Chemie, Bd. E XIV, Teil 2, Georg Thieme Verlag, Stuttgart, 1987, beschrieben.

Als Aminosulfonsäuren der Formel (V) seien beispielhaft genannt:
2-Aminoethansulfonsäure, N-Aminoethyl-2-aminoethansulfonsäure ($H_2NCH_2CH_2NHCH_2CH_2SO_3H$), 2-Aminobenzolsulfonsäure, 3-Aminobenzolsulfonsäure, 4-Aminobenzolsulfonsäure, Aminonaphthalinsulfonsäure, 4-Amino-1,3-benzoldisulfonsäure, 5-Amino-1,3-benzoldisulfonsäure und 2-Amino-1,4-benzoldisulfonsäure.

Beispiele

Die Prozentangaben in den folgenden Beispielen beziehen sich stets auf das Gewicht.

1) Herstellung des polymeren Emulgators I:
In einem mit einem Blattrührer ausgerüsteten 6-1-Stahlautoklaven wird unter Überleiten von Stickstoff folgendes Reaktionsgemisch vorgelegt:

| | |
|---|---|
| 3.026 g | entionisiertes Wasser |
| 546 g | eines alternierend aufgebauten Maleinsäureanhydrid/Diisobutylen-Copolymerisats ($\bar{M}_w \approx 11.000$) |
| 813 g | einer 46 Gew.-%igen wäßrigen Lösung von 2-Aminoethansulfonsäure-Na-Salz |

Nach dem Verschließen des Reaktors wird auf 100 °C erhitzt und 10 Stunden bei dieser Temperatur gerührt. Danach erhöht man die Temperatur auf 140 °C und rührt weitere 10 Stunden. Hierbei findet ein Druckanstieg auf ca. 5 bar statt. Anschließend wird auf Raumtemperatur abgekühlt und die entstandene polymere Lösung abgefüllt.
Festgeh.: 18,9 %; pH-Wert: 8,8.

2) Herstellung des polymeren Emulgators II:
Die Darstellung des polymeren Emulgators II erfolgt wie unter 1) beschrieben unter Einsatz von folgendem Reaktionsgemisch:
525 g eines alternierenden Maleinsäureanhydrid/Diisobutylen-Copolymerisats ($\bar{M}_w \approx 11.000$), 913,5 g einer 52 Gew.-%igen wäßrigen Lösung von N-Aminoethyl-2-aminoethansulfonsäure-Na-Salz und 3.337 g entionisiertes Wasser. Am Ende der Reaktion erhält man eine wäßrige Lösung des polymeren Emulgators II mit einem Feststoffgehalt von 19,2 Gew.-%.

3) Herstellung des polymeren Emulgators III:
Es wird wie unter 1) und 2) beschrieben verfahren, jedoch unter Einsatz nachstehenden Reaktionsgemisches: 350 g eines alternierend aufgebauten Copolymerisats aus Maleinsäureanhydrid und Octadecen-1 ($\bar{M}_w \approx 10.000$), 588 g einer 25 Gew.-%igen wässrigen Lösung von Na-Taurinat und 1.457 g entionisiertes Wasser.

Nach Beendigung der Reaktion erhält man eine wäßrige Lösung des polymeren Emulgators III mit einem Feststoffgehalt von 20,5 Gew.-% und einem pH-Wert von 8,5.

Herstellung der Leimungsmitteldispersion A

Unter Rühren und Überleiten von Stickstoff werden in einem Dreihalskolben, der mit Rührer, Rückflußkühler und zwei Tropftrichtern ausgerüstet ist, 100,5 g einer 18,9 % Gew.-%igen wäßrigen Lösung des polymeren Emulgators I sowie 5,0 g einer 20 Gew.-%igen wäßrigen Lösung des Ammoniumsalzes des niedermolekularen Emulgators der allgemeinen Formel (III) und 540 mg Rongalit C in 435 g elektolytfreiem Wasser vorgelegt und auf eine Temperatur von 50 °C erwärmt. Danach gibt man von den Lösungen 1) und 2) jeweils ein Viertel schnell zu und rührt 1 Stunde bei 50 °C. Anschließend werden die restlichen Lösungen 1) und 2) getrennt, aber gleichzeitig innerhalb von 3 Stunden zudosiert.

| | | | |
|---|---|---|---|
| Lösung 1): | 1,60 | g | Ammoniumpersulfat |
| | 140 | g | entionisiertes Wasser |
| Lösung 2): | 100 | g | Acrylnitril |
| | 100 | g | n-Butylacrylat |

Nach Dosierende wird noch 6 Stunden bei 50° C nachgerührt. Die entstandene feinteilige Dispersion wird zur Entfernung von Restmonomeren einem Entgasungsvorgang im Vakuum unterzogen.

Festgehalt der Dispersion: 26,4 %
Mittlere Teilchengröße: 66 nm

Herstellung der Leimungsmitteldispersion B

Zur Herstellung der Leimungsmitteldispersion B wird ähnlich wie bei der Herstellung des Leimungsmittels A verfahren, jedoch mit wie folgt geänderter Vorlage: 63,5 g der 18,9 Gew.-%igen wäßrigen Lösung des polymeren Emulgators I, 40 g einer 20 Gew.-%igen wäßrigen Lösung des niedermolekularen Emulgators der allgemeinen Formel (III), 540 mg Rongalit C und 436,5 g entionisiertes Wasser. Die übrige Versuchsführung ist gleich wie bei der Herstellung des Leimungsmittels A. Am Ende der Polymerisation erhält man eine feinteilige Leimungsmitteldispersion mit einem Feststoffgehalt von 26,1 % und einer durch LKS (LKS = Laserkorrelationsspektroskopie) ermittelten mittleren Teilchengröße von 47 nm.

Herstellung der Leimungsmitteldispersionen C und D

Die Herstellung dieser beiden Produkte erfolgt auf gleiche Weise wie bereits für die Leimungsmittel A und B beschrieben, jedoch mit wie folgt geänderten Vorlagen:

| | | | |
|---|---|---|---|
| Leimungsmittel C: | 84,7 | g | polymerer Emulgator I (18,9 %ige wäßrige Lösung) |
| | 20 | g | niedermolekularer Emulgator (20 %ige wäßrige Lösung) |
| | 540 | mg | Rongalit C |
| | 655 | g | entionisiertes Wasser |

Nach beendeter Reaktion erhält man eine feinteilige Dispersion des Leimungsmittels C mit einem Feststoffgehalt von 22,8 % und einer mittleren Teilchengröße von 59 nm.

| | | | |
|---|---|---|---|
| Leimungsmittel D: | 63,5 | g | polymerer Emulgator I (18,9 %ige wässrige Lösung) |
| | 40 | g | niedermolekularer Emulgator (20 %ige wäßrige Lösung) |
| | 540 | mg | Rongalit C |
| | 657 | g | entionisiertes Wasser |

Es ist eine Leimungsmitteldispersion D mit einem Feststoffgehalt von 20,9 % und einer mittleren Teilchengröße von 50 nm entstanden.

Herstellung der Leimungsmitteldispersion E

In einem Dreihalskolben werden unter Rühren und Überleiten von Stickstoff 156 g des polymeren

Emulgators II (Feststoffgehalt: 19,2 % in Wasser), 540 mg Rongalit C und 523,2 g entionisiertes Wasser vorgelegt und auf eine Temperatur von 50 °C erwärmt. Danach gibt man von den Lösungen 1) und 2) jeweils ein Viertel auf einmal zu und rührt eine Stunde bei 50 °C:

| | | | |
|---|---|---|---|
| Lösung 1): | 1,60 | g | Ammoniumpersulfat |
| | 140 | g | Wasser |
| Lösung 2): | 100 | g | Acrylnitril |
| | 100 | g | n-Butylacrylat |

Die restlichen Anteile der Lösungen 1) und 2) werden innerhalb von 3 Stunden gleichzeitig aber getrennt zugetropft. Nach beendeter Zugabe wird noch 6 Stunden bei 50 °C nachgerührt und dann die entstandene feinteilige Leimungsmitteldispersion einem Entgasungsprozeß im Vakuum unterworfen.

| | | |
|---|---|---|
| Feststoffgehalt: | 22,9 | % |
| Mittlere Teilchengröße: | 69 | nm |

Herstellung der Leimungsmitteldispersion F

Die Herstellung der Leimungsmitteldispersion F erfolgt auf gleiche Weise wie die der Leimungsmitteldispersion E, jedoch unter Einsatz des polymeren Emulgators III.

| | | | |
|---|---|---|---|
| Vorlage: | 195 | g | polymerer Emulgator III (Festgehalt: 20,5 % in Wasser) |
| | 540 | mg | Rongalit C |
| | 532 | g | entionisiertes Wasser |

Die übrige Versuchsdurchführung ist identisch mit der für die Herstellung der Leimungsmitteldispersion E beschriebenen Versuchsweise.

| | | |
|---|---|---|
| Feststoffgehalt: | 23,6 | % |
| Mittlere Teilchengröße: | 86 | nm |

Anwendungsbeispiele

Die Leimungswirkung der erfindungsgemäßen Leimungsmittel wurde sowohl auf alaunfreiem als auch auf alaunhaltigem Papier und in einem Fall (Anwendungsbeispiel 4) auch auf vorgeleimtem Papier geprüft. Dabei hatte das alaunfreie Papier folgende Zusammensetzung:

50 % Nadelholzzellstoff, 50 % Laubholzzellstoff, 9,5 % Clay-Asche, pH-Wert im Stoffauflauf: 7,2; Mahlgrad: 35 °SR; Naßaufnahme in einer Laborleimpresse: ca 85 %; Papiergewicht: 80 g/m$^2$.

Das alaunhaltige Papier hatte folgende Zusammensetzung:

50 % Nadelholzzellstoff, 50 % Laubholzzellstoff, 1 % Alaun, 11,2 % Clay-Asche, pH-Wert im Stoffauflauf: 5,0; Mahlgrad: 35 °SR; Naßaufnahme: ca. 80 %; Papiergewicht: 80 g/m$^2$.

Das vorgeleimte Papier hatte folgende Zusammensetzung:

50 % Nadelholzzellstoff, 50 % Laubholzzellstoff, 1 % Al-Sulfat, 11,1 % Clay-Asche, 0,1 % Harzleim, pH-Wert im Stoffauflauf: 4,5; Naßaufnahme: ca. 70 %; Papiergewicht: 80 g/m$^2$.

Die Leimung der Papiere erfolgte auf einer Laborleimpresse der Firma Mathis, Zürich, Schweiz, Type HF. Als Leimungsflotte wurde eine Lösung aus 5 Gew.-Teilen handelsüblicher Stärke sowie 0,128, 0,16 und 0,20 Teilen - berechnet als Wirksubstanz - des zu prüfenden Leimungsmittels verwendet, die mit Wasser

bis auf 100 Teile ergänzt wurde. Die Trocknung der oberflächengeleimten Papiere erfolgte auf einem Trockenzylinder innerhalb einer Minute bei ca 100 °C. Vor der Leimungsprüfung wurden die Papiere 2 Stunden bei Raumtemperatur klimatisiert.

Zur Beurteilung des Leimungsgrades der oberflächengeleimten Papiere wurden die Cobb-Werte (nach DIN 53 132) bestimmt sowie Tintenschwimmproben (TSP) durchgeführt. Für die Tintenschwimmproben wurden die Papiere in Streifen von 3 cm Breite und 3 cm Länge geschnitten und bei 22 °C auf blaue Prüftinte (DIN 53 126) gelegt, Nach für die einzelnen Papiersorten unterschiedlichen Prüfzeiten wurden die Probenpapiere von der Tinte genommen, rückseitig auf Löschpapier abgequetscht und nach 5 Minuten visuell beurteilt. Zur qualitativen Bestimmung der Tintendurchdringung durch das Papier und somit des Leimungsgrades wurde eine Bewertung mit den Zahlen 1 bis 5 durchgeführt, wobei die Zahlen im einzelnen bedeuten:

| | |
|---|---|
| 1 | kein Tintendurchschlag |
| 2 | 5 bis 10 % Tintendurchschlag |
| 3 | 10 bis 20 % Tintendurchschlag |
| 4 | ca. 50 % Tintendurchschlag |
| 4,5 *) | ca. 90 % Tintendurchschlag |
| 5 | 100 % Tintendurchschlag |

Die folgenden Tabellen 1 bis 8 zeigen die Wirksamkeit der erfindungsgemäßen Papieroberflächenleimungsmittel A-F auf alaunfreiem und alaunhaltigem Papier.

Anwendungsbeispiel 1

In der Tabelle 1 sind die mit den Leimungsmitteln A und B gemessenen Cobb-Werte und in Tabelle 2 die gefundenen Ergebnisse der Tintenschwimmproben (TSP) wiedergegeben:

*) Außerdem können noch weitere Zwischenwerte herangezogen werden.

Tabelle 1

| Papiersorte | Leimungsmittel A Cobb-Wert (60") i. $g/m^2$ bei Zusatz von | | Leimungsmittel B Cobb-Wert (60") i. $g/m^2$ bei Zusatz von | |
|---|---|---|---|---|
| | 0,16 % | 0,20 % | 0,16 % | 0,20 % |
| Alaunfrei | 27,0 | 25,3 | 28,2 | 25,3 |
| Alaunhaltig | 22,5 | 21,3 | 22,8 | 22,2 |

Tabelle 2

| Papiersorte | Zeit | Leimungsmittel A TSP b. Zusatz von | | Leimungsmittel B TSP b. Zusatz von | |
|---|---|---|---|---|---|
| | | 0,16 % | 0,20 % | 0,16 % | 0,20 % |
| Alaunfrei | 14' | 2,5 | 2 | 2,5 | 2 |
| Alaunhaltig | 10' | 2,5 | 1,5 | 2 | 1,5 |

Anwendungsbeispiel 2

In der Tabelle 3 sind die mit den Leimungsmitteln C und D gemessenen Cobb-Werte und in Tabelle 4 die gefundenen Ergebnisse der Tintenschwimmproben (TSP) wiedergegeben:

Tabelle 3

| Papiersorte | Leimungsmittel C Cobb-Wert (60") i. g/$m^2$ bei Zusatz von 0,16 % | 0,20 % | Leimungsmittel D Cobb-Wert (60") i. g/$m^2$ bei Zusatz von 0,16 % | 0,20 % |
|---|---|---|---|---|
| Alaunfrei | 27,9 | 25,7 | 26,8 | 25,3 |
| Alaunhaltig | 23,9 | 22,4 | 23,7 | 22,7 |

Tabelle 4

| Papiersorte | Zeit | Leimungsmittel C TSP b. Zusatz von 0,16 % | 0,20 % | Leimungsmittel D TSP b. Zusatz von 0,16 % | 0,20 % |
|---|---|---|---|---|---|
| Alaunfrei | 8' | 3 | 2 | 3 | 2 |
| Alaunhaltig | 12' | 3 | 2 | 2,5 | 2 |

Anwendungsbeispiel 3

Die Tabellen 5 und 6 geben die für das Leimungsmittel E ermittelten anwendungstechnischen Prüfergebnisse ebenfalls auf den beiden Papiersorten "Alaunfrei" und "Alaunhaltig" wieder:

Tabelle 5

| Papiersorte | Cobb-Wert (60") i. $g/m^2$ bei Zusatz von 0,16 % | 0,20 % |
|---|---|---|
| Alaunfrei | 27,5 | 26,2 |
| Alaunhaltig | 27,0 | 24,0 |

Tabelle 6

| Papiersorte | Zeit | TSP b. Zusatz von 0,16 % | 0,20 % |
|---|---|---|---|
| Alaunfrei | 11' | 2 | 1,5 |
| Alaunhaltig | 11' | 2 | 1,5 |

Anwendungsbeispiel 4

In den Tabellen 7 und 8 sind die mit dem Leimungsmittel F erhaltenen Prüfergebnisse auf alaunfreiem, alaunhaltigem und vorgeleimtem Papier zusammengefaßt:

Tabelle 7

| Papiersorte | Cobb-Wert (60") i. g/m² bei Zusatz von 0,128 % | 0,16 % | 0,20 % |
|---|---|---|---|
| Alaunfrei | 35,2 | 30,0 | 26,2 |
| Alaunhaltig | 28,5 | 23,0 | 22,1 |
| Vorgeleimt | 23,5 | 22,1 | 21,8 |

Tabelle 8

| Papiersorte | Zeit | TSP b. Zusatz von 0,128 % | 0,16 % | 0,20 % |
|---|---|---|---|---|
| Alaunfrei | 10' | 3 | 2,5 | 2 |
| Alaunhaltig | 8' | 3 | 2 | 1,5 |
| Vorgeleimt | 8' | 2,5 | 2 | 1,5 |

Wie durch die Anwendungsbeispiele 1 bis 4 gezeigt werden kann, weisen die erfindungsgemäßen Leimungsmittel auf Papieren unterschiedlicher Zusammensetzung ein ausgezeichnetes Leimungsverhalten auf.

Anwendungsbeispiel 5

Mit Hilfe dieses Beispiels wird das Schaumverhalten der Leimungsmittel A-F untersucht: 0,4 Gew.-% Wirksubstanz der zu prüfenden Leimungsmitteldispersionen werden in einer Leimungsflotte aus 5 Gew.-% handelsüblicher Stärke (Perfectamyl A 4692®) gelöst und auf 60 °C erhitzt. 200 ml dieser Leimungsflotte werden aus einem Metallgefäß, das an seiner Unterseite eine kreisförmige Öffnung von 4 mm Durchmesser besitzt, aus einer Höhe von 60 cm in ein graduiertes Becherglas im freien Fall geleitet. Das Volumen in ml des sich über der Flüssigkeitsoberfläche bildenden Schaums wird einmal sofort sowie nach 1-minütigem Stehen an der Luft bestimmt. Der erste Meßwert gibt dabei Aufschluß über die Schaumbildungstendenz der Leimungsmittel und der zweite Meßwert über die Geschwindigkeit des Schaumabbaus bzw. über die Stabilität des Schaums. Die mit den Leimungsmitteldispersionen erhaltenen Prüfergebnisse sind in Tabelle 9 zusammengefaßt:

Tabelle 9

| Leimungsmittel | Schaumvolumen in ml sofort | nach 1 Minute |
|---|---|---|
| A | 90 | 20 |
| B | 110 | 30 |
| C | 120 | 30 |
| D | 100 | 20 |
| E | 110 | 80 |
| F | 0 | 0 |

Die gefundenen Ergebnisse zeigen deutlich, daß die geprüften Produkte nur eine relativ geringe Neigung zur Schaumbildung aufweisen und der entstandene Schaum in der Regel sehr schnell wieder abgebaut wird. Das Leimungsmittel F kann sogar als absolut schaumfrei bezeichnet werden.

**Patentansprüche**

1. Polymerisate, erhältlich durch radikalische Emulsionspolymerisation von mindestens einem radikalisch polymerisierbaren Monomeren in Gegenwart eines Gemisches aus
   a) einem Polymerisat der Formeln (I) und/oder (II)

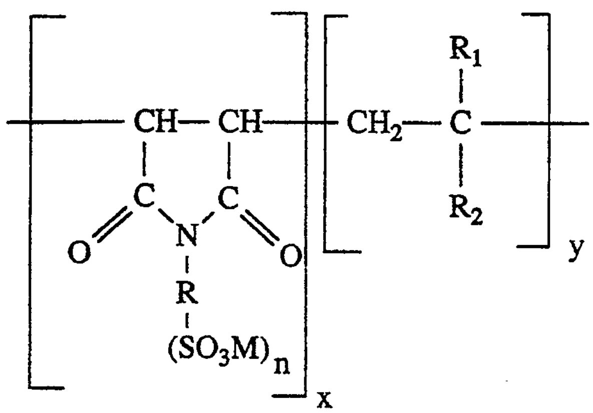

(I)

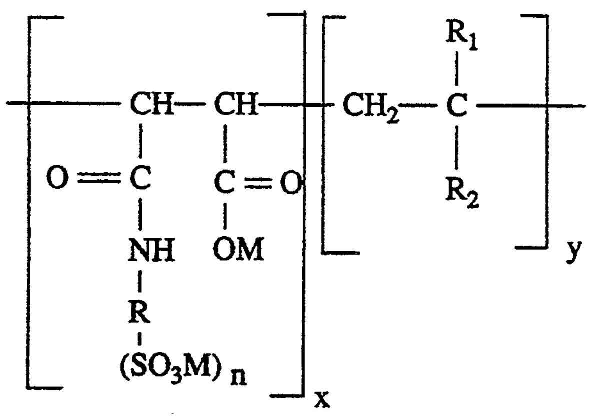

(II)

in denen

M einen kationenbildenden Rest, vorzugsweise H, Na, K, $NH_4$, $R_3NH_3$,

n 1 oder 2,

R einen aliphatischen Rest mit 1 bis 10 C-Atomen oder einen aromatischen Rest mit 6 bis 10 C-Atomen, bevorzugt einen von einem $C_1$-$C_4$-Alkan oder von Benzol, Methylbenzol oder Naphthalin abgeleiteten Rest oder $-(CH_2)_2NH(CH_2)_2-$,

$R_1$ H,$-CH_3$,

$R_2$ H, $C_1$-$C_{16}$-Alkyl, vorzugsweise $-CH_3$, $-C_2H_5$, $-C_4H_9$, $-CH_2-C(CH_3)_3$,$-C_{14}H_{29}$, $-C_{16}H_{33}$ und Phenyl,

$R_3$ Kohlenwasserstoffrest eines Amins bezeichnen und

x,y so gewählt werden, daß das Gewichtsmittelmolekulargewicht ($\overline{M}_w$) der Polymerisate (I) und (II) 5000 bis 500 000, vorzugsweise 10 000 bis 100 000, beträgt und das Verhältnis von x:y = 1:4 bis 1:1, bevorzugt 1:3 bis 1:1 ist,

und

b) einem niedermolekularen, Sulfonsäuregruppen tragenden Emulgator.

**2.** Polymerisate gemäß Anspruch 1, dadurch gekennzeichnet, daß man ein Polymerisat der Formeln (I) und/oder (II) einsetzt, worin R für $-CH_2-CH_2-$steht.

**3.** Polymerisate gemäß Anspruch 1, dadurch gekennzeichnet, daß man ein Polymerisat der Formeln (I) und/oder (II) einsetzt, worin R für $-CH_2CH_2-NH-CH_2-CH_2-$ steht.

**4.** Polymerisate gemäß Anspruch 1 oder 3, dadurch gekennzeichnet, daß man ein Gemisch der Polymerisate (I) und (II), in dem vorzugsweise ≧80, besonders bevorzugt ≧90 Gew.-%, bezogen auf das Gemisch, Struktureinheiten (I) vorliegen, einsetzt.

**5.** Polymerisate gemäß Anspruch 1, dadurch gekennzeichnet, daß man als niedermolekularen, Sulfonsäuregruppen tragenden Emulgator eine araliphatische Sulfonsäure der allgemeinen Formel (III)

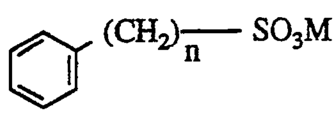

(III)

wobei

n = 10-14,

M = H, Na, K, $NH_4$, $R_3NH_3$, einsetzt.

**6.** Polymerisate gemäß einem oder mehreren der Ansprüche 1 bis 5, dadurch gekennzeichnet, daß man als radikalisch polymerisierbare Monomere Styrol(derivate), (Meth)Acrylate und/oder (Meth)Acrylnitril verwendet.

**7.** Polymerisate gemäß einem oder mehreren der Ansprüche 1 bis 6, dadurch gekennzeichnet, daß man mindestens ein radikalisch polymerisierbares Monomer aus der Reihe Styrol, α-Methylstyrol, Acrylnitril, Vinylacetat, Ethylacrylat, Methylacrylat, n-Butylacrylat, 2-Ethylhexylacrylat, Methylmethacrylat, Methacrylsäureoxipropylester einsetzt.

**8.** Polymerisate gemäß einem oder mehreren der Ansprüche 1 bis 7, dadurch gekennzeichnet, daß man ein Monomergemisch aus 20 bis 80 Gew.-%, insbesondere 30 bis 70 Gew.-%, n-Butylacrylat und 80 bis 20 Gew.-%, insbesondere 70 bis 30 Gew.-%, Acrylnitril einsetzt.

**9.** Polymerisate gemäß einem oder mehreren der Ansprüche 1 bis 8, dadurch gekennzeichnet, daß das Gewichtsverhältnis von polymerem zu niedermolekularem Emulgator zwischen 20:1 und 1:1, bevorzugt zwischen 10:1 und 3:2, beträgt.

**10.** Verwendung der Polymerisate gemäß einem oder mehreren der Ansprüche 1 bis 9 zur Oberflächenleimung von Papier oder papierähnlichen Materialien.

Europäisches Patentamt

# EUROPÄISCHER RECHERCHENBERICHT

Nummer der Anmeldung

**EP 91 10 9402**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-1 720 679 (BAYER)<br>* Das ganze Dokument *<br>– – – | 1-10 | C 08 F 267/10<br>D 21 H 17/42 |
| A | US-A-4 317 893 (CHEN et al.)<br>* Patentansprüche *<br>– – – | 1-10 | |
| A | CHEMICAL ABSTRACTS, Band 101, 1984, Seite 15, Zusammenfassung Nr. 91664n, Columbus, Ohio, US;<br>& JP-A-59 015 402 (LION CORP.) 26-01-1984<br>* Zusammenfassung *<br>– – – – – | 1,5 | |

| RECHERCHIERTE SACHGEBIETE (Int. Cl.5) |
|---|
| C 08 F |

Der vorliegende Recherchenbericht wurde für alle Patentansprüche erstellt

| Recherchenort | Abschlußdatum der Recherche | Prüfer |
|---|---|---|
| Den Haag | 18 Juli 91 | ANDRIOLLO G.R. |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument